# EUROPEAN PATENT APPLICATION

(11) **EP 4 556 734 A1**
(43) Date of publication of application: **21.05.2025**
(21) Application number: 23839388.8
(22) Date of filing: 13.06.2023
(51) Int. Cl.: F16C 33/78, B60B 35/02, B60B 35/14, F16J 15/16, F16J 15/3232

(54) **SEALING DEVICE**

(30) Priority: 11.07.2022 JP 2022111276
(71) Applicant: NOK Corporation, Minato-ku Tokyo 105-8585 (JP); NOK Klueber Co., Ltd., Tokyo 105-0012 (JP)
(72) Inventor: SHUTO, Yuichi, Fukushima-shi, Fukushima 960-1193 (JP); HIROTA, Kazuki, Fukushima-shi, Fukushima 960-1193 (JP); YANAGISAWA, Nobuaki, Kitaibaraki-shi, Ibaraki 319-1541 (JP)
(74) Representative: Global IP Europe Patentanwaltskanzlei
(86) International application number: PCT/JP2023/021865
(87) International publication number: WO 2024/014213

(57) **Abstract**

A sealing device includes a body, a first lip protruding from the body, a second lip protruding from the body and positioned apart from the first lip in a radially inward direction of the first lip, a first grease applied to a surface of the first lip, and a second grease applied to a surface of the second lip. Properties of the first grease differ from properties of the second grease.

## Description

### Technical Field

This invention relates to sealing devices.

### BACKGROUND ART

Ball bearings are used in wheel hubs of vehicles. The inside of a ball bearing is sealed by use of a sealing device, an example of which is disclosed in Patent Document 1.

The sealing device disclosed in Patent Document 1 is press-fitted between an inner ring and an outer ring of a bearing, and is provided with lips. A distal surface of each lip is provided in elastic sliding contact with an inner peripheral surface of the inner ring of the bearing, which prevents intrusion of foreign matter, such as muddy water or dust. Grease is applied to the distal surface of each lip to facilitate slidability and the like

### Related Art Document

### Patent Document

Patent Document 1: Japanese Patent Application Laid-Open Publication No. 2010-185491

### SUMMARY OF THE INVENTION

### Problem to be solved by the invention

In a conventional sealing device, grease that is the same is applied to each lip of the sealing device. Consequently, optimal performance of the lips of the conventional sealing device is not realized. Consequently, the conventional sealing device does not realize its full functional performance of suppressing entry of foreign matter and low torque.

### Means for solving the problems

To solve the above problems, a sealing device according to one aspect of this disclosure is a sealing device for sealing an annular gap between an inner member and an outer member of a hub bearing, the inner member being rotatable relative to the outer member. The sealing device includes a body, a first lip protruding from the body, a second lip protruding from the body and positioned apart from the first lip in a radially inward direction of the first lip, a first grease applied to a surface of the first lip, and a second grease applied to a surface of the second lip. The first lip and the second lip each extend from the body toward either the inner member or the outer member, and properties of the first grease differ from properties of the second grease.

### Effect of the Invention

According to this disclosure, functional properties of the sealing device can be fully realized.

### BRIEF DESCRIPTION OF THE DRAWINGS

FIG. 1 is a cross-sectional view of a hub bearing according to a first embodiment.
FIG. 2 is a partial cross-sectional view of the seal member, which is an example of a sealing device in use.
FIG. 3 shows the seal member shown in FIG. 2 in a state not installed on a hub bearing.
FIG. 4 shows two or more seal members in a stacked state.
FIG. 5 shows a relationship between a consistency of a first grease and a torque.
FIG. 6 shows a relationship between a consistency of a second grease and a torque.
FIG. 7 is an explanatory diagram of a procedure for measuring consistency.
FIG. 8 is an explanatory diagram of a procedure for measuring consistency.
FIG. 9 shows a relationship between a muddy water resistance, a torque, and a grease.
FIG. 10 is a diagram showing a seal member according to a first modification.
FIG. 11 is a diagram showing a seal member according to a second modification.

### Modes for carrying out the invention

Description will now be given below of preferred embodiments according to this disclosure, with reference to the accompanying drawings. In the drawings, dimensions and scales of respective parts may differ from those in practice, and some parts are depicted schematically for ease of understanding. The scope of this disclosure is not limited to these embodiments unless in part otherwise explicitly stated in the disclosure.

### 1. First Embodiment

### 1-1. Hub Bearing

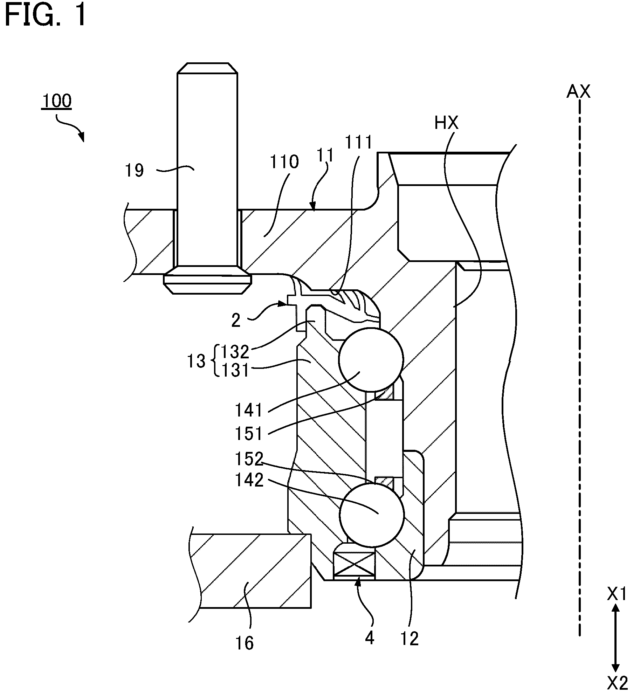

FIG. 1 is a partial cross-sectional view of a hub bearing 100 according to a first embodiment. Hereinafter, a direction from any point upward in the drawing is referred to as an "X1 direction," and a direction from any point upward in the drawing is referred to as an "X2 direction."

Further, application of this disclosure is not limited to the hub bearing 100 shown in FIG. 1, and this disclosure is applicable to other hub bearings. The hub bearing 100 is a ball bearing, but the application of this disclosure is not limited to the ball bearing. The hub bearing 100 may be another type of bearing, such as a roller bearing or a needle bearing. Although the hub bearing 100 shown in FIG. 1 is used for a vehicle, the hub bearing according to this disclosure is also applicable to a machine other than the vehicle.

The hub bearing 100 shown in FIG. 1 includes a hub 11, an inner ring 12, an outer ring 13, a plurality of] balls 141, a plurality of] balls 142, a plurality of retainers 151, and a plurality of retainers 152. The hub 11 is an example of an "inner member." The outer ring 13 is an example of an "outer member." Here, FIG. 1 shows any of the plurality of balls 141 and any of the plurality of] balls 142. Likewise, FIG. 1 shows any of the plurality of retainers 151 and any of the plurality of retainers 152

The hub 11 has an opening HX through which a spindle (not shown) is inserted. A central axis of the opening HX corresponds to the central axis AX of the hub bearing 100. The central axis AX extends in the X1 direction. A wheel of the vehicle is disposed the outside of the vehicle in the X1 direction of the hub bearing 100. Differential gears and similar parts are disposed toward the inside of the vehicle in the X2 direction of the hub bearing 100. The leftward direction in FIG. 1 is a radially outward direction, and the rightward direction in FIG. 1 is a radially inward direction. The hub 11 further includes a flange 110 that extends radially farther outward than the outer ring 13. A wheel is attachable to the flange 110 by use of bolts 19.

The inner ring 12 is attached to the hub 11. The outer ring 13 is positioned radially farther outward than the inner ring 12 and is spaced apart from the inner ring 12 and the hub 11. The outer ring 13 includes a base 131 and an end 132 that extends from the base 131 in the X1 direction. The balls 141 are disposed between the hub 11 and the outer ring 13. Although not shown in detail, the balls 141 are arranged circumferentially in a row around the central axis AX. The balls 142 are positioned in the X1 direction relative to the balls 141. The balls 141 are disposed between the inner ring 12 and the outer ring 13. The balls 141 are arranged circumferentially in a row around the central axis AX. Similarly, the balls 142 are disposed between the inner ring 12 and the outer ring 13. The balls 142 are arranged circumferentially in a row around the central axis AX. The retainers 151 retain the balls 141. The retainers 152 retains the balls 142.

In the hub bearing 100, the outer ring 13 is fixed to a knuckle 16, and the hub 11 and the inner ring 12 rotate relative to the outer ring 13. The interior of the hub bearing 100 is filled with a lubricant.

As shown in FIG. 1, a seal member 2 is disposed between the hub 11 and the outer ring 13. The seal member 2 corresponds to a "seal member." The seal member 2 is annular and seals a gap between the hub 11 and the outer ring 13. A seal member 4 is disposed between the inner ring 12 and the outer ring 13. The seal member 4 is annular and seals a gap between the inner ring 12 and the outer ring 13. The seal member 4 is positioned closer toward the inside of the vehicle than the seal member 2. The seal member 2 is positioned closer toward the outside of the vehicle than the seal member 4. The arrangement of the seal members 2 and 4 allows rotation of the hub 11 and the inner ring 12 while preventing entry of foreign matter (e.g., muddy water and dust) into the interior of the hub bearing 100.

### 1-2. Seal member 2

The seal member 2 is fixed to the outer ring 13 and slides against an inner peripheral surface 111 of the hub 11.

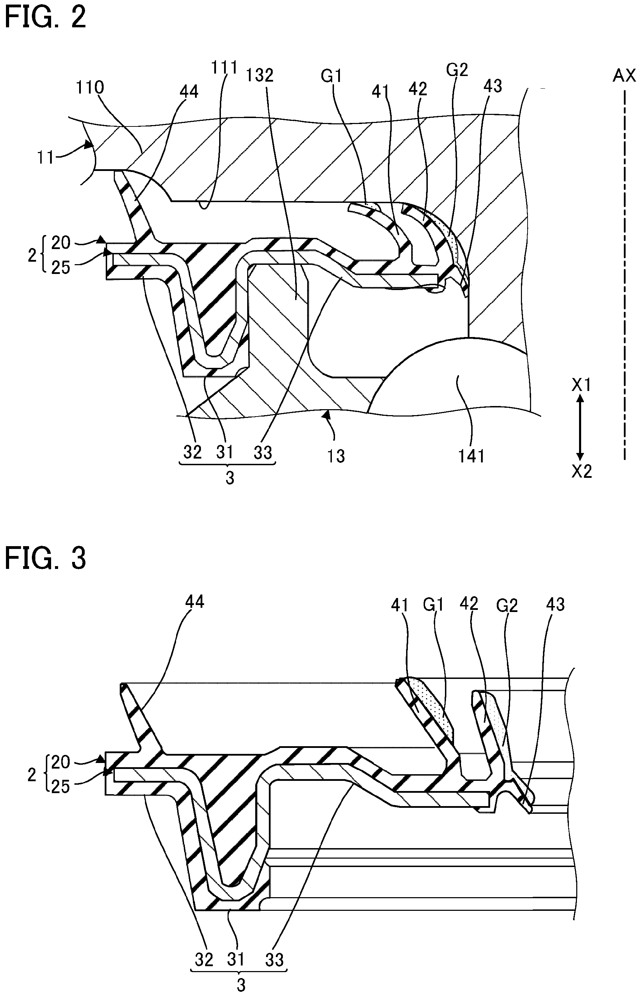

FIG. 2 is a partial cross-sectional view of the seal member 2, which is an example of the sealing device in use. The phrase "in use" refers to a state in which the seal member 2 is attached to the hub bearing 100. As shown in FIG. 2, the seal member 2 is a composite structure that includes an elastic ring 20 and a reinforcing ring 25. The elastic ring 20 is formed of, for example, an elastomer. The reinforcing ring 25 is formed of a metal or an alloy. The reinforcing ring 25 is sufficiently rigid to reinforce the elastic ring 20. The reinforcing ring 25 is in close contact with the elastic ring 20 and is partly embedded in the elastic ring 20.

The seal member 2 includes a body 3, a first lip 41, a second lip 42, a third lip 43, and a fourth lip 44. The body 3 is fixed to the outer ring 13. The first, second, third, and fourth lips 41, 42, 43, and 44 protrude from the body 3 toward the hub 11. The hub 11 is an example of an "inner member."

In the example shown in FIG. 2, the body 3 includes a cylindrical portion 31, an outer annular portion 32 and an inner annular portion 33. The cylindrical portion 31 includes a thick portion of the elastic ring 20 and a U-shaped (cross section) portion of the reinforcing ring 25. The cylindrical portion 31 is provided outward of the end 132 of the outer ring 13 and is centered on the central axis AX. The cylindrical portion 31 is fixedly fitted into the end 132.

The outer annular portion 32 extends radially outward from the cylindrical portion 31. The outer annular portion 32 is comprised of a part of the elastic ring 20 and the reinforcing ring 25.

The inner annular portion 33 extends radially inward from the cylindrical portion 31. In the example shown in FIG. 2, the inner annular portion 33 extends radially inward from the cylindrical portion 31 at an oblique angle in the X1 direction and then extends farther radially inward. The inner annular portion 33 is comprised of a part of the elastic ring 20 and the reinforcing ring 25. A portion of the reinforcing ring 25 included in the inner annular portion 33 is in contact with the end 132.

Each of the first, second, third, and fourth lips 41, 42, 43, and 44 shown in FIG. 2 is elastic and comprises a part of the elastic ring 20. The first, second, third, and fourth lips 41, 42, 43, and 44 are spaced apart from each other. Each of the first, second, third, and fourth lips 41, 42, 43, and 44 is thin annular and protrudes from the body 3 toward the hub 11. When the seal member 2 is disposed on the hub bearing 100, the first, second, third, and fourth lips 41, 42, 43, and 44 are in contact with the hub 11 and deform under a reaction force. In use, a distal end of each of the first, second, and third lips 41, 42, and 43 is in contact with the inner peripheral surface 111 of the hub 11 and slides on the inner peripheral surface 111.

The first lip 41 is provided radially farther outward than the second lip 42. The first lip 41 is referred to as a side lip. The first lip 41 extends from the inner annular portion 33 of the body 3 in the X1 direction, that is, it extends toward the outside of the vehicle. The first lip 41 prevents foreign matter, such as muddy water, from entering the inside of the hub bearing 100.

The second lip 42 is provided apart from the first lip 41 in the radially inward direction of the first lip 41. The second lip 42 is an intermediate lip between the first lip 41 and the third lip 43. The second lip 42 extends from the inner annular portion 33 of the body 3 in the X1 direction, that is, it extends toward the outside of the vehicle. Similarly to the first lip 41, the second lip 42 prevents foreign matter, such as muddy water, from entering the inside of the hub bearing 100. More specifically, the second lip 42 impedes foreign matter that has moved past the first lip 41.

The third lip 43 is positioned radially innermost among the lips. The third lip 43 is also referred to as a grease lip. The third lip 43 extends radially inward from the inner annular portion 33 of the body 3 and further extends at an oblique angle in the X2 direction. The third lip 43 prevents grease from moving out of the inside of the hub bearing 100.

The fourth lip 44 is positioned radially outermost among the lips. The fourth lip 44 is positioned farther radially outward than the first lip 41 and is also referred to as an outer lip. The fourth lip 44 extends from the outer annular portion 32 of the body 3 in the X1 direction, that is, it extends toward the outside of the vehicle. The fourth lip 44 prevents foreign matter, such as muddy water, from entering the inside of the hub bearing 100. Provision of the fourth lip 44 enhances prevention of entry of foreign matter. However, the fourth lip 44 may be omitted as appropriate. Further, the fourth lip 44 is in contact with the flange 110. However, the fourth lip 44 need not be in contact with the flange 110, and there may be a gap between the fourth lip 44 and the flange 110. That is, the fourth lip 44 may act as a labyrinth seal.

FIG. 3 shows the seal member 2 shown in FIG. 2 in a state in which it is not yet installed on the hub bearing 100. As shown in FIG. 3, before the seal member 2 is installed on the hub bearing 100, no force acts on any of the first, second, third, and fourth lips 41, 42, 43, and 44, and thus they are not deformed and remain straight.

### 1-3. Grease

As shown in FIG. 3, grease is applied to each of the first, second, and third lips 41, 42, and 43. Grease may also be applied to the fourth lip 44 as appropriate. However, when the fourth lip 44 is used in a labyrinth seal, no grease is applied to it. Application of the grease to each lip enhances their sealing performance, slidability and durability as compared to when no grease is applied.

The first lip 41 has a surface to which a first grease G1 is applied. The second and third lips 42 and 43 each have a surface to which a second grease G2 different from the first grease G1 is applied. The first grease G1 is applied to a surface of the first lip 41, especially, to a distal end surface thereof. More specifically, the first grease G1 is applied to a radially inner surface of the distal end surfaces of the first lip 41. The second grease G2 is applied to the surface of the second lip 42, especially, to a distal end surface. Further, the second grease G2 is applied to the surface of the third lip 43, especially, to a distal end surface. More specifically, the second grease G2 is applied to a radially inner surface of the distal end surface of the second lip 42, and to a radially inner surface of the distal end surface of the third lip 43. The first grease G1 and the second grease G2 each include a base oil, a thickener, and an additive.

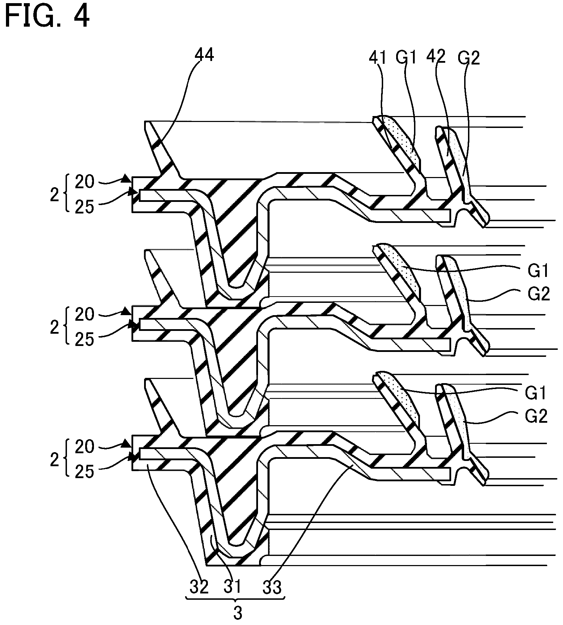

FIG. 4 shows two or more seal members 2 in a stacked state. When the seal members 2 are stacked as shown in FIG. 4 they can be packed at a factory for transportation to a destination. After application of grease to the three lips of each seal member 2, the seal members 2 are stacked. Thus, each of the first grease G1 and the second grease G2 is applied before packing and transportation.

Properties differ between the grease applied to the first lip 41 and the grease applied to the second lip 42. By applying a grease with different properties to the first lip 41 and the second lip 42, optimal performance of the lips can be realized. Thus, optimal and reliable performance of the seal member 2 can be realized.

In this embodiment, an example of properties of each of the first grease G1 and the second grease G2 is expressed as a consistency number defined in JIS K 2220: 2013. Another example of the properties is a shear viscosity of the grease under sliding. Specifically, a consistency number of the second grease G2 defined in JIS K 2220: 2013 differs from that of the first grease G1 defined in JIS K 2220: 2013. Further, a shear viscosity of the second grease G2 under sliding differs from that of the first grease G1 under sliding. The difference in the consistency number or the shear viscosity between the first grease G1 and the second grease G2 enables both prevention of entry of foreign matter and low torque to be achieved. The relationship between the consistency number and the shear viscosity is true when the first grease G1 and the second grease G2 each have the same base oil viscosity, the same type of base oil, and the same type of thickener.

A content percentage of the thickener in the second grease G2 differs from a content percentage of the thickener in the first grease G1, and thus the consistency number of the second grease G2 differs from the consistency number of the first grease G1. Further, the shear viscosity of the second grease G2 differs from the sheer viscosity of the first grease G1. Thus, both prevention of entry of foreign matter and low torque can each be achieved. The relationship between the content percentages of the thickeners is true when the first grease G1 and the second grease G2 have the same type of thickener.

In this embodiment, the consistency number of the second grease G2 is lower than the consistency number of the first grease G1. As a result, low torque can be achieved for each of the first lip 41 and second lip 42. Further, foreign matter is easily prevented from moving within the first grease G1, and thereby foreign matter is prevented from reaching the second lip 42.

The shear viscosity of the second grease G2 is less than the sheer viscosity of the first grease G1. As a result, foreign matter can be prevented from reaching the second lip 42 and low torque can be achieved, similarly to the effects provided when the consistency number of the second grease G2 is lower than the consistency number of the first grease G1. As described above, the relationship between the consistency number and the shear viscosity is true when the first grease G1 and second grease G2 each have the same base oil viscosity, the same type of base oil, and the same type of thickener.

The content percentage of the thickener in the second grease G2 is less than the content percentage of the thickener in the first grease G1. Consequently, the consistency number of the second grease G2 can be decreased to be less than the consistency number of the first grease G1. Further, it is possible to decrease the shear viscosity of the second grease G2 to be less than that of the first grease G1. For these reasons, the foregoing effects are shown. The relationship between the content percentages of the thickeners is true when the first grease G1 and the second grease G2 have the same type of thickener.

The first lip 41 is exposed more directly and thus more easily to foreign matter from outside, such as muddy water, than the second lip 42. For this reason, the first lip 41 requires high sealing performance to prevent entry of the foreign matter. However, high sealing performance causes a high surface pressure on the inner peripheral surface 111 of the hub 11 to be generated the first lip 41, which results in premature wear of the first lip 41 and a shortened life span of the first lip 41. In particular, if there is no provision of the fourth lip 44 or if the fourth lip 44 is a labyrinth seal, the first lip 41 is more directly and easily exposed to the outside. In such a scenario, air or other gas flows out from a space between the first and second lips 41 and 42, and negative pressure is likely to be generated. When negative pressure is eliminated at once, torque increases, and thus torque disturbance is likely to occur. As a result, in addition to sealing performance, the first lip 41 needs to function with low friction to prevent wear and prevent airflow to avoid generation of negative pressure.

As described above, the first grease G1 applied to the first lip 41 has a lower consistency than the second grease G2 applied to the second lip 42. That is, the first grease G1 is harder than the second grease G2. A high consistency achieves low wear, and a low torque. However, use of the first grease G1 with a low consistency for the first lip 41 is likely to cause channeling due to shear during use of the seal member 2. Channeling here refers to a phenomenon by which the first grease G1 is pushed off the first lip 41.

When channeling shears the first grease G1 between the first lip 41 and the inner peripheral surface 111, the first lip 41 is less susceptible to resistance of the first grease G1. As a result, viscous resistance is reduced, and a gap between the first lip 41 and the inner peripheral surface 111 occurs readily. The reduction in viscous resistance causes low torque, thereby providing resistance to wear. The occurrence of the gap also enables airflow.

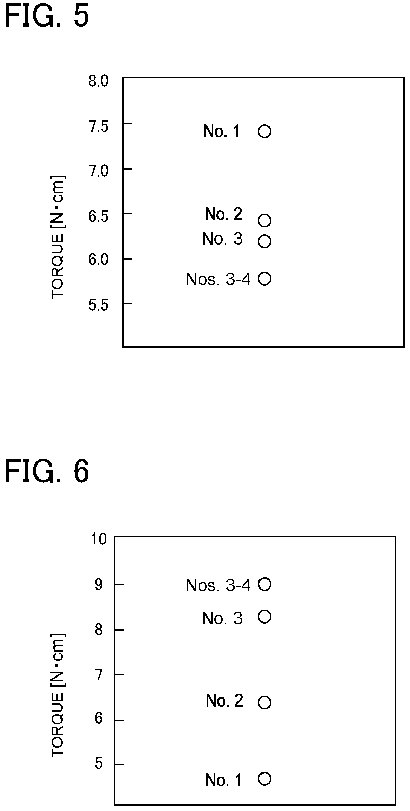

FIG. 5 shows a relationship between a consistency of first grease G1 and a torque. The first grease G1 used in FIG. 5 has the same base oil viscosity, the same base oil type, and the same thickener type. As shown in FIG. 5, as the consistency of the first grease G1 decreases, the torque decreases. That is, the softer the first grease G1 is, the lower the torque. This may be related to ease of channeling. Thus, it is preferable that a grease used as the first grease G1 is a grease that easily causes channeling.

Since a consistency of the first grease G1 is less than the consistency of the second grease G2, foreign matter is easily prevented from moving within the first grease G1. As a result, the foreign matter is prevented from reaching the second lip 42, which enhances sealing performance of the first lip 41.

Description is given of the first grease G1 in view of consistency. The effect provided by the shear viscosity of the first grease G1 is also the same as that provided by the consistency described above.

As described above, the second lip 42 is less exposed to the outside than the first lip 41, and thud airflow need not be secured. However, low friction is required to prevent wear. Sealing performance is also required to block fine foreign matter that passes the first lip 41.

As described above, the second grease G2 applied to the second lip 42 has a higher consistency than that of the first grease G1 applied to the first lip 41. A high consistency results in low torque and low wear. As a result, use of the second grease G2 enhances sealing performance and low torque as compared without use of the grease.

FIG. 6 shows a relationship between a consistency of the second grease G2 and a torque. The second grease G2 used in FIG. 6 has the same base oil viscosity, the same type of base oil, and the same type of thickener. As shown in FIG. 6, as the consistency of the second grease G2 increases, the torque decreases. Low torque is achieved by reducing the shear viscosity or the consistency number of the second grease G2 to be less than that of the first grease G1. Thus, it is preferable that the grease used as the second grease G2 is a grease that is less likely cause channeling.

Description is given of the second grease G2 in view of consistency. The effect provided by hardness, that is, viscosity of the second grease G2 is also the same as that provided by the consistency described above.

As described above, use of the first grease G1 for the first lip 41 and use of the second grease G2 for the first lip 41 provide better performance of the first and second lips 41 and 42, as compared to when the grease is not selectively used. Specifically, for the first grease G1, grease that easily causes channeling is selected, and for the second grease G2, grease with a lower grease viscosity or a lower consistency number is selected. Such selections achieve low torque for the seal member 2.

Application of a third grease G3 that is the same as the second grease G2 to the third lip 43 provides the same effect for the third lip 43 as the second lip 42. In other words, use of the third grease G3 enhances sealing performance and provides low torque. By enhancing sealability of the third lip 43 lubricant can be prevented from moving outside from within the inside. Another grease that differs from the second grease G2 may be applied to the third lip 43.

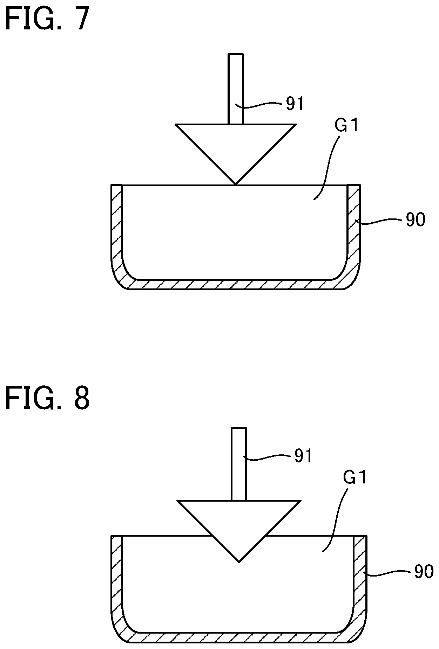

FIGS. 7 and 8 are each explanatory diagrams showing a procedure for measuring consistency. Consistencies are measured in accordance with the procedure defined in IS K 2220: 2013. A brief description will be given below of the procedure for measuring consistency of the first grease G1. The same procedure is applicable for measurement of a consistency of the second grease G2.

As shown in FIG. 7, a first grease G1 is placed into a mixer 90 as defined in JIS K 2220: 2013. After the first grease G1 has been kept at a predetermined temperature, a predetermined cone 91 is adjusted such that the tip of the cone 91 is in contact with the upper surface of the first grease G1. Thereafter, as shown in FIG. 8, the cone 91 is allowed to enter the first grease G1 for 5 ± 0.1 seconds, and a depth of penetration is measured. This measurement is carried out three times. A consistency is obtained by multiplying the depth of penetration by 10.

The consistency number of the first grease G1 is, preferably, No. 3 or No. 4, but it is not particularly limited thereto. The consistency number of the second grease G2 is, preferably, No. 1 or No. 2, but it not particularly limited thereto. The consistency of the first grease G1 is, preferably, 175 or more and 250 or less, but it is particularly limited thereto. The consistency of the second grease G2 is 265 or more and 340 or less, but it is particularly limited thereto. Such a consistency number or a consistency makes channeling by the first lip 41 easier and makes channeling by the second lip 42 more difficult. As a result, effective can be provided by the first and second lip 41 and the second lip 42.

It is preferable that the first grease G1 and the second grease G2 each have the same type of the base oil, the same type of the thickener, and the same type of the additive. By use of these same types, a desired hardness or consistency can be easily adjusted. Specifically, for example, adjusting the content percentage or changing conditions for dispersion of the grease enables a hardness or consistency of the grease to be adjusted with ease. Thus, the consistency can be changed even if the content percentage of the thickener is the same. In this case, conditions for homogenizing the grease are consistent. The base oil may be a mineral oil or a synthetic oil, preferably, a synthetic hydrocarbon oil, although not particularly limited thereto. The thickener may be a metal soap, a metal composite soap, or a urea compound, but is not particularly limited thereto. The thickener is, preferably, Li soap or Li complex soap.

A ten-point mean roughness (RzJIS) of a sliding surface of the first lip 41 is, preferably, 5µm or more and 20µm or less, but is not particularly limited thereto. A ten-point mean roughness (RzJIS) of a sliding surface of the second lip 42 is, preferably, 5µm or less, but is not particularly limited thereto. Within such a range, the sealing performance of the seal member 2 and low torque is particularly enhanced.

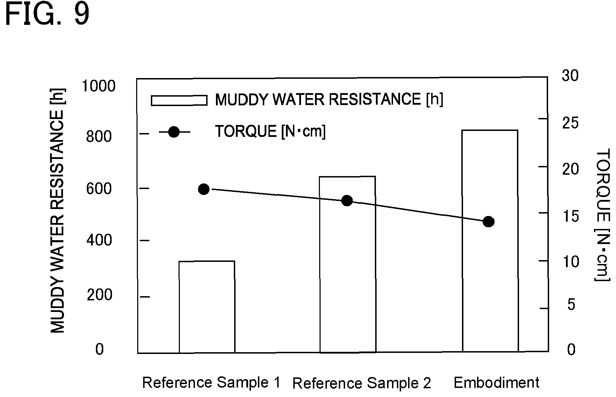

FIG. 9 shows a relationship between a muddy water resistance, a torque, and a grease. The muddy water resistance shown in FIG. 9 was evaluated in time [h] during which the sealing performance was ensured under muddy water.

In Reference Sample 1 shown in FIG. 9, a ten-point mean roughness of a first lip 41x and a ten-point mean roughness of a second lip 42x were each 10µm or more and 20µm or less. A consistency number of a first grease G1x and a consistency number of a second grease G2x were each No. 2.

In Reference Sample 2, a ten-point mean roughness of the first lip 41x was 10µm or more and 20µm or less. A ten-point mean roughness of the second lip 42x was 1µm or more and 5µm or less. A consistency number of the first grease G1 and a consistency number of the second grease G2 were each No. 2.

In this embodiment, a ten-point mean roughness of the first lip 41 was 10µm or more and 20µm or less. A ten-point mean roughness of the second lip 42 was 1µm or more and 5µm or less. A consistency number of the first grease G1 was No. 3 or No. 4. A consistency number of the second grease G2 was No. 1.

As will be clear from FIG. 9, in this embodiment, time [h] during which the sealing performance is secured under a condition of muddy water is longer, and a torque [N*cm] is less than those in Reference Samples 1 and 2. Thus, the consistency number of the second grease G2 is less than that of the first grease G1, which achieves sealing performance and low torque of the seal member 2. Further, the ten-point mean roughness of the first lip 41 is greater than that of the second lip 42, which more effectively enhances the sealing performance and the low torque of the seal member 2.

### 2. Second Embodiment

Description will now be given below of a second embodiment according to this disclosure. In the following exemplary embodiments, detailed description will be omitted as appropriate of each element with the same function or action as that of the first embodiment.

In the second embodiment, the consistency number of the second grease G2 is greater than that of the first grease G1. Further, in the second embodiment, the second grease G2 is harder than the first grease G1. Consequently, it is possible to reduce a risk that the second grease G2 may leak to the outside. For example, when a centrifugal force acts on the second grease G2, a risk is reduced of the second grease G2 becoming detached from the second lip 42 and leaking to the outside. Thus, the second grease G2 is kept on the second lip 42, and thereby performance of the second lip 42 to prevent foreign matter flowing through the first lip 41 is effectively shown. The relationship between the consistency number and the hardness is true when the first grease G1 and second grease G2 have the same base oil viscosity, the same type of base oil, and the same type of thickener.

The content percentage of the thickener in the second grease G2 is greater than the content percentage of the thickener in the first grease G1. Consequently, the consistency number of the second grease G2 can be increased to be higher than that of the first grease G1. Further, it is possible to increase the hardness of the first grease G1 to be higher than that of the second grease G2. As a result, the foregoing effects are realized. The relationship of the content percentages of the thickeners is true when the first and second greases G1 and G2 have the same type of thickener.

### 3. Third Embodiment

Description will be now given below of a third embodiment according to this disclosure. In the following exemplary embodiments, detailed description will be omitted as appropriate of each element with the same function or action as that of the first embodiment.

In this embodiment, an example of the properties of each of the first grease G1 and the second grease G2 is water resistance. Specifically, a water resistance of the first grease G1 is greater than a water resistance of the second grease G2. Since the first lip 41 is closer to the outside than the second lip 42, foreign matter, such as muddy water, easily enters. The first grease G1 with water resistance enhances a life span of the entire seal member 2.

### 4. Fourth Embodiment

Description will be now given below of a fourth embodiment according to this disclosure. In the following exemplary embodiments, detailed description will be omitted as appropriate of each element with the same function or action as that of the first embodiment.

In this embodiment, an example of the properties of each of the first grease G1 and the second grease G2 is color density. Specifically, the color density of the first grease G1 is greater than the color density of the second grease G2. The color density is expressed as lightness or saturation. The lower the brightness or saturation, the darker the color. The first grease G1 is positioned closer to the outside than the second grease G2. Since the first grease G1 is dark in color, it is easy to recognize leakage of the first grease G1 due to water or the like, and analyze leakage of the first grease G1.

### 5. Modifications

A variety of modifications described below is derived from the foregoing embodiments. Each modification may be combined as appropriate.

### 5-1. First modification

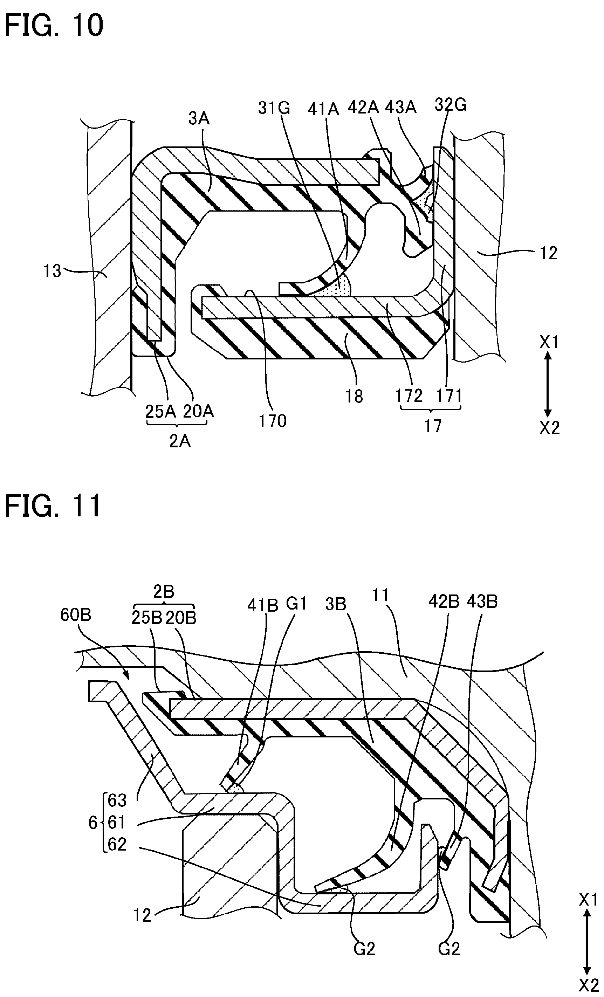

FIG. 10 is a diagram of a seal member 2A according to a first modification. In the foregoing embodiments, description is given of the seal member 2 provided closer toward the outside of the vehicle, which is an example of the "sealing device" according to this disclosure. This disclosure may be applied to a seal member provided toward the inside of the vehicle.

The seal member 2A shown in FIG. 10 is an example of a "sealing device." The seal member 2A is provided at a position corresponding to the seal member 4 shown in FIG. 1. The seal member 2A is a sealing device provided toward the inside of the vehicle.

The seal member 2A is a composite structure that includes an elastic ring 20A and a reinforcing ring 25A. The reinforcing ring 25A is embedded in the elastic ring 20A and is fixed to the outer ring 13. The outer ring 13 is another example of the "outer member." The seal member 2A includes a body 3A, a first lip 41A, a second lip 42A, and a third lip 43A. The first, second, and third lips 41A, 42A, and 43A protrude from the body 3A toward a slinger 17 fixed to the inner ring 12. The slinger 17 is another example of the "inner member." The slinger 17 includes an annular portion 171, and a flange 172 that extends from the annular portion 171 toward the outer ring 13. A magnetic rubber 18 used for detecting a rotational speed of the inner ring 12 is fixed to the flange 172.

The body 3A is fixed to the outer ring 13 and includes a part of the elastic ring 20A and the reinforcing ring 25A. The first, second, and third lips 41A, 42A, and 43A are each a part of the elastic ring 20A. A distal end of each of the first, second, and third lips 41A, 42A, and 43A is in contact with an inner peripheral surface 170 of the slinger 17 and slides on the inner peripheral surface 170 in use.

The first lip 41A is positioned farther radially outward than the second lip 42. The first lip 41A is referred to as a side lip. The first lip 41A extends toward the flange 172 of the slinger 17 and is in contact with the flange 172. The second lip 42A is an intermediate lip between the first lip 41A and the third lip 43A. The second lip 42A extends toward the annular portion 171 of the slinger 17 and is in contact with the annular portion 171. The third lip 43A is positioned radially innermost among the lips. The third lip 43A is referred to as a grease slip. The third lip 43A extends toward the annular portion 171 of the slinger 17 and is in contact with the annular portion 171.

A first grease G1 is applied to a surface of the first lip 41A, especially, to a distal surface thereof. A second grease G2 is applied to a surface of each of the second and third lips 42A and 43A, especially, to a distal surface of each. Another grease that differs from the second grease G2 may be applied to the third lip 43A.

The first grease G1 is applied to the first lip 41A. The second grease G2, the properties of which differs from those of the first grease G1, is applied to each of the second and third lisps 42A and 43A. As a result, the seal member 2A provides effects similar to those of the embodiments.

### 5-2. Second Modification

FIG. 11 is a diagram of a seal member 2B according to a second modification. In the foregoing embodiments, the seal member 2 is fixed to the outer ring 13, which is an example of the "outer member." However, in this disclosure, the seal member 2B may be fixed to the "inner member."

The seal member 2B shown in FIG. 11 is fixed to the hub 11. The hub 11 is another example of an "inner member." An annular seal cover 6 is fixed to the outer ring 13. In this modification, a structurer 60B including the seal cover 6 and the seal member 2B is another example of the "sealing device."

The seal cover 6 is formed of, for example, a metal or an alloy. The seal cover 6 includes a fixed portion 61, an outer annular portion 62, and an inner annular portion 63. The fixed portion 61 is fixed to the outer ring 13. The outer annular portion 62 extends radially outward from the fixed portion 61 and extends at oblique angle in the X1 direction. The inner annular portion 63 is opposite the outer annular portion 62 and is connected to the fixed portion 61. The inner annular portion 63 extends radially inward from the fixed portion 61 and then extends in the X1 direction.

The seal member 2B is a composite structure that includes an elastic ring 20B and a reinforcing ring 25B. The reinforcing ring 25B is embedded in the elastic ring 20B and is fixed to the hub 11. The hub 11 is another example of the "inner member." The seal member 2B includes a body 3B, a first lip 41B, a second lip 42B, and a third lip 43B. The first, second, and third lips 41B, 42B, and 43B each protrude from the body 3B toward the outer ring 13. The outer ring 13 is another example of the "outer member." The distal end each of the first, second, and third lips 41B, 42B, and 43B is in contact with an outer surface of the seal cover 6, and slide on the outer surface thereof in use.

The body 3B is fixed to the hub 11 and includes a part of the elastic ring 20B and the reinforcing ring 25B. The first, second, and third lips 41B, 42B, and 43B are each a part of the elastic ring 20B.

The first lip 41B is provided radially farther outward than the second lip 42. The first lip 41B is referred to as a side lip. The second lip 42B is an intermediate lip between the first lip 41B and the third lip 43B. The third lip 43B is positioned radially innermost among the lips. The third lip 43B is referred to as a grease slip.

A first grease G1 is applied to a surface of the first lip 41B, especially, to a distal surface thereof. A second grease G2 is applied to a surface of each of the second and third lips 42B and 43B, especially, to a distal surface of each. Another grease that differs from the second grease G2 may be applied to the third lip 43B.

The first grease G1 is applied to the first lip 41B. The second grease G2, the properties of which differs from those of the first grease G1, is applied to each of the second and third lisps 42B and 43B. As a result, the seal member 2B provides effects similar to those of the embodiments.

### 5-3. Other modifications

The structure of the "sealing device" may be a structure other than that described in the first embodiment, the first modification, and the second modification. For example, in the first embodiment, the seal member 2 includes the fourth lip 44; however, the fourth lip 44 may be omitted. For example, the cylindrical portion 31 of the body 3 included in the seal member 2 is positioned farther radially outward than the end 132 of the outer ring 13. However, the cylindrical portion 31 may be positioned farther radially inward than the end 132.

Description in this disclosure is based on the preferred embodiments. However, this disclosure is not limited to such embodiments. The configuration of each element of this disclosure is replaceable with a freely chosen configuration that has the same functions of the foregoing embodiments, and may include an additional freely chosen configuration. Freely chosen configurations of the foregoing embodiments may be combined with one another.

### Description of Reference Signs

2... seal member, 2A... seal member, 2B... seal member, 3... body, 3A... body, 3B... body, 4... seal member, 6... seal cover, 11... hub, 12... inner ring, 13... outer ring, 16... knuckle, 17... slinger, 18.... magnetic rubber, 19... bolt, 20... elastic ring, 20A... elastic ring, 20B... elastic ring, 25... reinforcing ring, 25A... reinforcing ring, 25B... reinforcing ring, 31... cylindrical portion, 32... outer annular portion, 33... inner annular portion, 41... first lip, 41A... first lip, 41B... first lip, 42... second lip, 42A... second lip, 42B... second lip, 43... third lip, 43A... third lip, 43B... third lip, 44... fourth lip, 60B... structurer, 61... fixed portion, 62... outer annular portion, 63... inner annular portion, 90... mixer, 91... cone, 100... hub bearing, 110... flange, 111... inner peripheral surface, 131... base, 132... end, 141... balls, 142... balls, 151... holders, 152... holders, 170... inner peripheral surface, 171... annular portion, 172... flange, AX... central axis, G1... first grease, G2... second grease, G3... third grease, and HX... opening.

## Claims

1. A sealing device for sealing an annular gap between an inner member and an outer member of a hub bearing, the inner member being rotatable relative to the outer member, the sealing device comprising:
a body;
a first lip protruding from the body;
a second lip protruding from the body and positioned apart from the first lip in a radially inward direction of the first lip;
a first grease applied to a surface of the first lip; and
a second grease applied to a surface of the second lip, wherein:
the first lip and the second lip each extend from the body toward either the inner member or the outer member, and
properties of the first grease differ from properties of the second grease.

2. The sealing device according to claim 1, wherein a consistency number of the second grease defined in JIS K 2220: 2013 differs from a consistency number of the first grease defined in JIS K 2220: 2013.

3. The sealing device according to claim 2, wherein the consistency number of the second grease in JIS K 2220: 2013 is less than the consistency number of the first grease defined in JIS K 2220: 2013.

4. The sealing device according to claim 1, wherein a shear viscosity of the second grease under sliding differs from a shear viscosity of the first grease under sliding.

5. The sealing device according to claim 4, wherein the shear viscosity of the second grease under sliding is less than the shear viscosity of the first grease under sliding.

6. The sealing device according to claim 1, wherein a content percentage of a thickener in the second grease differs from a content percentage of a thickener in the first grease.

7. The sealing device according to claim 6, wherein the content percentage of the thickener in the second grease is less than the content percentage of the thickener in the first grease.

8. The sealing device according to claim 1, wherein a water resistance of the first grease is greater than a water resistance of the second grease.

9. The sealing device according to claim 1, wherein a color density of the first grease is greater than a color density of the second grease.
